# EUROPÄISCHE PATENTSCHRIFT

(11) **EP 0 406 632 B1**
(45) Veröffentlichungstag und Bekanntmachung des Hinweises auf die Patenterteilung: **12.05.1993**
(21) Anmeldenummer: 90111805.9
(22) Anmeldetag: 22.06.1990
(51) Int. Cl.: C01B 17/90

(54) **Verfahren und Vorrichtung zum Konzentrieren metallsulfathaltiger Schwefelsäure**
Process and apparatus for the concentration of metal sulphates containing sulphuric acid
Procédé et appareil pour concentrer de l'acide sulfurique contenant des sulfates métalliques

(30) Priorität: 05.07.1989 DE 3922105
(43) Veröffentlichungstag der Anmeldung: 09.01.1991
(73) Patentinhaber: BAYER AG, 51368 Leverkusen (DE)
(72) Erfinder: Lailach, Günter, Dr., D-4150 Krefeld (DE); Gerken, Rudolf, Dr., D 4150 Krefeld-Traar (DE); Kürby, Heinz-Joachim, Dipl.-Ing., D-4150 Krefeld-Traar (DE); Neubauer, Klaus, Dipl.-Ing., D-4005 Meerbusch 3 (DE)

(56) Entgegenhaltungen:
- EP-A- 0 133 505
- DE-A- 2 618 121
- DE-A- 2 618 122
- GB-A- 1 385 926

## Beschreibung

Die vorliegende Erfindung betrifft ein Verfahren zur Rückgewinnung von Schwefelsäure aus metallsulfathaltigen Dünnsäuren durch Eindampfen, Abscheiden schwefelsäure und metallsulfathaltiger Tropfen aus den Brüden vor deren Kondensation und Abtrennen der Metallsulfate aus der beim Eindampfen erhaltenen Suspension sowie eine Vorrichtung zur Durchführung dieses Verfahrens.

Es ist bekannt, verdünnte metallsulfathaltige Schwefelsäure, insbesondere sogenannte Dünnsäure aus dem Sulfatprozeß zur Titandioxidherstellung, durch mehrstufige Vakuumverdampfung so weit zu konzentrieren, daß die Metallsulfate weitgehend unlöslich werden und von einer 62 bis 70%igen Schwefelsäure abgetrennt werden können, die in den Prozeß zurückgeführt wird (EP-A 133 505). Dabei treten allerdings Verluste an Schwefelsäure und Metallsulfaten auf, die zu einer Verunreinigung des Brüdenkondensats führen.

Angesichts der zunehmend strengeren Anforderungen an die Abwasserqualität müssen diese Verluste verringert werden.

Eine Fällung von Gips und Metallhydroxiden aus dem Brüdenkondensat durch Zugabe von Calciumverbindungen führt zu schlecht filtrierbaren, stark verdünnten Suspensionen und letztlich zu einem Deponieproblem.

Primäres Ziel sollte deshalb sein, die Verunreinigung des Brüdenkondensats durch metallsulfathaltige Tropfen zu vermeiden. Der naheliegende Vorschlag, diese Tropfen mittels Tropfenabscheider vor der Brüdenkondensation abzuscheiden, führt aber zu großen Problemen, weil die festen Metallsulfate dazu neigen, an den Tropfenabscheidern festzukleben und so erhebliche Störungen des Prozesses verursachen können.

Diese Probleme werden dadurch vergrößert, daß sich die Metallsulfate, insbesondere das Eisensulfat-Monohydrat, in kaltem Wasser nur schlecht auflösen. Bei einem Druck von 30 bis 100 mbar, wie er bei der Vakuumeindampfung von Schwefelsäure auf ca. 70 % erforderlich ist, kühlt sich aber Wasser, das gegebenenfalls zum Waschen von Tropfenabscheidern während des Betriebes eingesprüht wird, sofort auf 25 bis 45°C ab. Die Tropfenabscheider können unter diesen Bedingungen nur mit relativ großen Wassermengen betriebsfähig gehalten werden. Die Eindampfung des aus dem Tropfenabscheider abfließenden kontaminierten Wassers beeinträchtigt den Prozeß jedoch sehr.

Das Ziel der vorliegenden Erfindung ist es, ein Verfahren zur Verfügung zu stellen, mit dem die Verunreinigung des Brüdenkondensats, das beim Konzentrieren metallsulfathaltiger Schwefelsäure in Vakuumverdampfern anfällt, auf ein Minimum reduziert wird, ohne den Prozeß nachteilig zu beeinträchtigen.

Ein weiteres Ziel ist es, eine Apparatur zur Verfügung zu stellen, mit der das erfindungsgemäße Verfahren besonders günstig durchgeführt werden kann.

Das erfindungsgemäße Ziel wird dadurch erreicht, daß die Brüden ungereinigt aus den Verdampfern abgeleitet werden und die metallsulfathaltigen Schwefelsäuretropfen, die mit den Brüden aus den Vakuumverdampfern ausgetragen werden, in Tropfenabscheidern abgeschieden werden, die zum Vermeiden von Metallsulfatablagerungen mit mindestens einem Teil der für die Eindampfung vorgesehenen metallsulfathaltigen Schwefelsäure, im folgenden Dünnsäure genannt, besprüht werden. Diese Dünnsaure wird anschließend in die Vakuumverdampferanlage eingespeist.

Dieses Verfahren ist Gegenstand dieser Erfindung.

Es wurde weiterhin gefunden, daß ein störungsfreier Betrieb der Vakuumverdampfer mit nachgeschalteten Tropfenabscheidern besonders dann gewährleistet wird, wenn in die Tropfenabscheider mindestens 30 %, vorzugsweise 50 bis 100 % der insgesamt in die Eindampfanlage eingespeisten Dünnsäure kontinuierlich eingesprüht werden. Besonders vorteilhaft ist es, wenn die Dünnsäure eine Temperatur von maximal 50°C, vorzugsweise weniger als 40°C hat.

Die Erfindung betrifft demzufolge bevorzugt ein Verfahren zur Vakuumeindampfung von Dünnsäure, bei dem aus den Brüden metallsulfathaltige Schwefelsäuretropfen in Tropfenabscheidern abgeschieden werden, in die mindestens 30 %, vorzugsweise 50 bis 100 % der für die Eindampfung vorgesehenen Dünnsäure eingesprüht werden, wobei diese Dünnsäure vorzugsweise eine Temperatur unter 40°C hat, und vorzugsweise kontinuierlich eingesprüht wird.

Überraschend wurde weiterhin gefunden, daß Tropfenverluste in Verdampferstufen mit einer Schwefelsäurekonzentration unter 40 Gew.-% dadurch nahezu vollständig vermieden werden können, daß geringe Mengen eines Entschäumers in diese Verdampfer eingespeist werden. Erfindungsgemäß wird deshalb in Verdampfer, in denen der Schwefelsäuregehalt unter 40 Gew.-% liegt, ein Entschäumer dosiert eingeleitet, während Verdampfer, in denen der Schwefelsäuregehalt über 40 Gew.-% liegt, mit nachgeschalteten Tropfenabscheidern ausgerüstet werden. Vorzugsweise werden 0,1 bis 10 ppm Entschäumer zur einzudampfenden Schwefelsäure zugesetzt, besonders bevorzugt 0,5 bis 5 ppm. Als besonders vorteilhafte Entschäumer werden sulfonierte Fettsäuren zugesetzt.

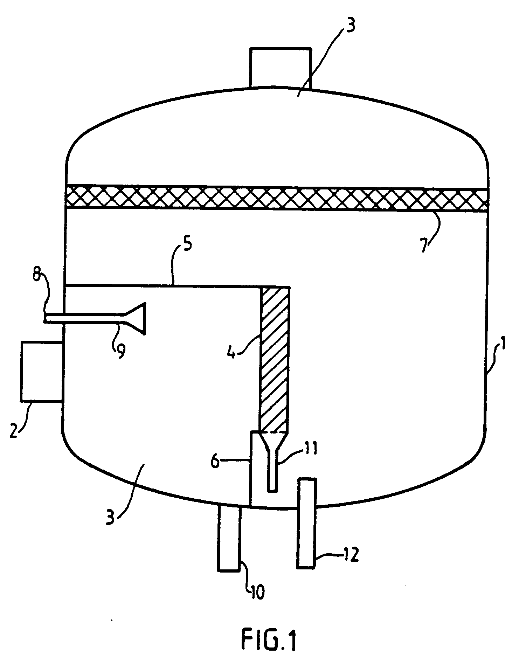

Gegenstand dieser Erfindung ist weiterhin eine Vorrichtung zum Abscheiden feststoffhaltiger Schwefelsäuretropfen aus Brüden entsprechend dem erfindungsgemäßen Verfahren. Diese Vorrichtung besteht aus einem Lamellenabscheider, vor dem Düsen angebracht sind, so daß er mit Dünnsäure besprüht werden kann und einem dahinter angeordneten Demister (auch als Wire mesh-Abscheider bezeichnet). Beispielhaft ist diese Apparatur in Fig. 1 dargestellt, wobei konstruktive Änderungen im Sinne der Erfindung durchaus möglich sind. Ein Behälter 1 ist mit einem unteren Brüdenaustrittsstutzen 2 für die Einleitung der tropfenhaltigen Brüden aus dem Vakuumverdampfer und einem oberen Brüdenaustrittsstutzen 3 für die Ableitung der praktisch tropfenfreien Brüden zum Brüdenkondensator ausgestattet. Der Brüdeneinströmbereich 3 wird durch den vertikal angeordneten Lamellenabscheider 4 und die Trennwände 5 und 6 vom restlichen Behältervolumen getrennt. Im oberen Bereich des Behälters 1 ist horizontal der Demister 7 angeordnet. Vor dem Lamellenabscheider 4 sind ein oder mehrere Einleitrohre 8 mit Düsen 9 zum Einleiten und Versprühen der Dünnsäure angebracht. Im unteren Teil des Behälters 1 befinden sich die Rohrleitungen 10, 11 und 12 zum Ableiten der Dünnsäure und der abgeschiedenen metallsulfathaltigen Tropfen. Die metallsulfathaltige Schwefelsäuretropfen enthaltenden Brüden gelangen durch den Stutzen 2 in den Behälter 1. Beim Durchströmen des Lamellenabscheiders 4 werden die größeren, feste Metallsulfate enthaltenden Tropfen abgeschieden. Die abgeschiedenen Tropfen und Feststoffe werden durch Besprühen des Lamellenab scheiders 4 mit Dünnsäure weggespült und über das Tauchrohr 11 und das Ableitrohr 12 aus dem Behälter 1 entfernt. Die Brüden, die nach dem Durchströmen des Lamellenabscheiders 4 noch feine Schwefelsäuretropfen bzw. Dünnsäuretropfen enthalten, durchströmen den Demister 7 und werden durch den Stutzen 3 zum Brüdenkondensator geleitet. Im Demister 7 werden die Flüssigkeitströpfchen praktisch vollständig aus den Brüden abgeschieden.

Besonders vorteilhaft an der erfindungsgemäßen Vorrichtung ist, daß sie einen hohen Abscheidegrad bei geringem Gesamtverlust gewährleistet.

Das erfindungsgemäße Verfahren kann auch in anderen sinnentsprechenden Apparaten durchgeführt werden, die einen oder mehrere mit Dünnsäure besprühte Abscheider zum Abscheiden der feststoffhaltigen, aus dem Verdampfer mitgerissenen Tropfen und einen nachgeschalteten Demister haben. Der mit Dünnsäure besprühte Abscheider und der Demister können auch räumlich getrennt in hintereinander geschalteten Apparaten angeordnet sein. Strömungstechnisch günstig ist die Anordnung einer horizontalen Füllkörperschicht unter einem horizontal eingebauten Demister. Nachteilig bei dieser apparativen Ausführung ist allerdings, daß eine so hohe Dünnsäureberieselungsdichte erforderlich ist, daß die Dünnsäure im Kreislauf gepumpt werden muß.

Die Vorteile des erfindungsgemäßen Verfahrens sollen anhand der Beispiele verdeutlicht werden, ohne daß hierin eine Einschränkung zu sehen ist.

### Vergleichsbeispiel 1

In einem dreistufigen Vakuumzwangsumlaufverdampfer wurden 32 t/h Dünnsäure mit 24,6 Gew.-% H₂SO₄ und 12,8 Gew.-% MeSO₄ eingespeist. In der ersten Verdampferstufe, die mit 5 bar-Dampf beheizt wurde, wurden bei 120°C und 0,9 bar (abs.) 7,65 t/h Wasser verdampft. Aus dem ersten Verdampfer flossen 24,35 t/h Säure mit 32,3 Gew.-% H₂SO₄ und 16,8 Gew.-% MeSO₄ in den zweiten Verdampfer. Die zweite Verdampferstufe wurde mit den Brüden aus der ersten Verdampferstufe beheizt. Im zweiten Verdampfer wurden bei 85°C und 50 mbar 8,1 t/h Wasser verdampft.

Aus dem zweiten Verdampfer flossen 16,6 t/h einer Suspension, die 47,0 Gew.-% H₂SO₄ und 24,6 Gew.-% MeSO₄, überwiegend in fester Form enthielt, in die dritte Verdampferstufe. Diese wurde ebenfalls mit 5 bar-Dampf beheizt. Hier wurden bei 88°C und 50 mbar 0,8 t/h Wasser verdampft. Aus dem dritten Verdampfer wurden 15,3 t/h einer Suspension mit 51,0 Gew.-% H₂SO₄ und 26,6 Gew.-% MeSO₄ ausgespeist. Nach dem Abkühlen der Suspension wurde 67,8 %ige Schwefelsäure als Filtrat von den Metallsulfaten abgetrennt.

Die Brüden aus dem zweiten und dritten Verdampfer wurden gemeinsam in einem Einspritzkondensator kondensiert. Die stündlich angefallenen 8,95 t Brüdenkondensat enthielten 72 kg H₂SO₄ und 22 kg MeSO₄. Die Brüden aus dem ersten Verdampfer, die im Wärmeaustauscher der zweiten Verdampferstufe kondensiert worden waren, enthielten in 7,65 t Kondensat 10,2 kg H₂SO₄ und 5,3 kg MeSO₄.

Insgesamt gelangten 1,05 % der eingespeisten Schwefelsäure und 0,67 % der eingespeisten Metallsulfate in das Brüdenkondensat.

### Vergleichsbeispiel 2

Bei dem Vakuumverdampfersystem gemäß Vergleichsbeispiel 1 wurden in die Brüdenleitungen des zweiten und dritten Verdampfers mehrstufige Lamellentropfenabscheider eingebaut, um die Kontaminierung des Brüdenkondensats zu verringern.

Um Verstopfungen durch abgelagerte Metallsulfate zu vermeiden, wurde der in die Brüdenleitung der Verdampferstufe 2 eingebaute Abscheider mit 1,7 m³/h Wasser besprüht. Aus dem Abscheider flossen 1,5 m³/h Spülflüssigkeit mit 33°C ab, die 63 kg/h H₂SO₄ und 18 kg/h MeSO₄ enthielten. Bei der dritten Verdampferstufe wurden 0,75 % m³/h Wasser eingesprüht. Hier flossen stündlich 0,71 m³ Spülflüssigkeit mit 6 kg H₂SO₄ und 2 kg MeSO₄ ab. Die Spülflüssigkeit wurde mit der Dünnsäure in die Verdampferstufe 1 eingespeist, weshalb die Menge der eingespeisten Dünnsäure gegenüber Vergleichsbeispiel 1 von 32 t/h auf 28 t/h vermindert werden mußte.

Das insgesamt stündlich angefallene Brüdenkondensat enthielt 21,3 kg H₂SO₄ und 9,1 kg MeSO₄.

Der Druckverlust in den Tropfenabscheidern lag anfangs bei 14 mbar. Um den Druck in den Verdampferstufen 2 und 3 bei 50 mbar zu halten, mußten 30 % mehr Kühlwasser für die Brüdenkondensation aufgewendet werden als in Vergleichsbeispiel 1.

Die Lamellenabscheider mußten trotz der intensiven Besprühung mit Wasser jeweils nach mehreren Wochen Betriebsdauer ausgebaut und gereinigt werden.

### Beispiel 1

Bei einer Vakuumverdampferanlage gemäß Vergleichsbeispiel 1 wurden die Brüdenleitungen des zweiten und dritten Verdampfers zusammengefaßt und an einem Tropfenabscheider gemäß Fig. 1 angeschlossen. In den Tropfenabscheider 1 werden über die Zuleitung 8 32 t/h Dünnsäure mit der in Vergleichsbeispiel 1 angegebenen Konzentration und einer Temperatur von 31°C eingeleitet und versprüht. Die Dünnsäure erwärmte sich im Kontakt mit den überhitzten Brüden auf 42°C. Sie floß über die Ableitungen 10 und 12 aus dem Tropfenabscheider 1 zum ersten Verdampfer. Hierbei wurde sie mit 50 g/h einer sulfonierten Fettsäure (Monopolöl®, Fa. Stockhausen, Krefeld) als Entschäumer versetzt.

Der Dampfverbrauch lag durch die Vorwärmung der Dünnsäure um 340 kg/h niedriger als im Vergleichsbeispiel 1. Der Gesamtdruckverlust, den die Brüden im Tropfenabscheider 1 erführen, lag bei 5 bis 6 mbar und blieb über Wochen konstant. Durch den Druckverlust im Tropfenabscheider erhöhte sich der Kühlwasserverbrauch bei der Brüdenkondensation um 12 %.

Das stündlich im Wärmetauscher der zweiten Verdampferstufe anfallende Brüdenkondensat des ersten Verdampfers enthielt 1,2 kg H₂SO₄ und 0,6 kg MeSO₄ in 7,65 t H₂O. Aus dem zweiten und dritten Verdampfer fielen nach der Tropfenabscheidung 9,1 t/h Kondensat mit 5,4 kg H₂SO₄ und 1,6 kg MeSO₄ an.

Durch die Anwendung des erfindungsgemäßen Verfahrens in seiner bevorzugten Ausführung verringerten sich die Tropfenverluste gegenüber Vergleichsbeispiel 1 von 1,05 % auf 0,08 % H₂SO₄-Verlust und von 0,67 auf 0,05 % MeSO₄-Verlust.

## Patentansprüche

1. Verfahren zur Rückgewinnung von Schwefelsäure aus metallsulfathaltigen Dünnsäuren durch Eindampfen, Abscheiden schwefelsäure- und metallsulfathaltiger Tropfen aus den Brüden vor deren Kondensation und Abtrennen der Metallsulfate aus der beim Eindampfen erhaltenen Suspension, dadurch gekennzeichnet, daß die Brüden durch ein Tropfenabscheidersystem geleitet werden, das mit Dünnsäure besprüht wird.

2. Verfahren gemäß Anspruch 1, dadurch gekennzeichnet, daß mindestens 30 %, vorzugsweise 50 bis 100 % der in das Verdampfersystem zwecks Eindampfung eingespeisten Dünnsäure zuerst in das Tropfenabscheidersystem eingesprüht und anschließend zusammen mit den aus den Brüden abgeschiedenen Tropfen und Feststoffen in den Verdampfer eingeleitet werden.

3. Verfahren gemäß einem der Ansprüche 1 oder 2, dadurch gekennzeichnet, daß die Dünnsäure kontinuierlich in das Tropfenabscheidersystem eingesprüht wird.

4. Verfahren gemäß einem oder mehrerer der Ansprüche 1 bis 3, dadurch gekennzeichnet, daß die in das Tropfenabscheidersystem eingesprühte Dünnsäure eine Temperatur von maximal 50°C, vorzugsweise weniger als 40°C hat.

5. Verfahren gemäß einem oder mehrerer der Ansprüche 1 bis 4, dadurch gekennzeichnet, daß bei mehrstufigen Verdampfersystemen mit der Dünnsäure 0,1 bis 10 ppm, vorzugsweise 0,5 bis 5 ppm Entschäumer in den ersten Verdampfer eingespeist werden.

6. Verfahren gemäß einem oder mehrerer der Ansprüche 1 bis 5, dadurch gekennzeichnet, daß bei mehrstufigen Verdampfersystemen nur die Brüden aus den Verdampfern durch Tropfenabscheider geleitet werden, in denen die Schwefelsäurekonzentration größer als 40 Gew.-% ist.

7. Verfahren gemäß einem oder mehrerer der Ansprüche 1 bis 6, dadurch gekennzeichnet, daß die Brüden zwecks Tropfenabscheidung zuerst durch einen mit Dünnsäure besprühten Abscheider und danach durch einen Demister geleitet werden.

8. Verfahren gemmäß einem oder mehrerer der Ansprüche 1 bis 7, dadurch gekennzeichnet, daß die Brüden zwecks Tropfenabscheidung zuerst durch einen Lamellenabscheider, der mit Dünnsäure besprüht wird, und anschließend durch einen Demister geleitet werden.

9. Vorrichtung zur Abscheidung von metallsulfathaltigen Schwefelsäuretropfen aus Brüden, dadurch gekennzeichnet, daß hinter einem Lamellenabscheider horizontal ein Demister angeordnet ist und vor dem Lamellenabscheider eine Zuleitung und Sprüheinrichtung zum Besprühen des Lamellenabscheiders mit Dünnsäure vorhanden ist.

## Claims

1. A process for the recovery of sulphuric acid from spent acids containing metal sulphate by evaporation, deposition of drops containing sulphuric acid and metal sulphate from the vapours before their condensation, and separation of the metal sulphates from the suspension obtained on evaporation, characterized in that the vapours are passed through a drop separator system that is sprayed with spent acid.

2. A process according to Claim 1, characterized in that at least 30 %, preferably 50 to 100 %, of the spent acid fed to the evaporator system for the purpose of evaporation is first sprayed into the drop separator system and subsequently, together with the drops and solids deposited from the vapours, introduced into the evaporator.

3. A process according to one of Claims 1 or 2, characterized in that the spent acid is sprayed continuously into the drop separator system.

4. A process according to one or more of Claims 1 to 3, characterized in that the spent acid sprayed into the drop separator system has a temperature of no more than 50 °C, and preferably less than 40 °C.

5. A process according to one or more of Claims 1 to 4, characterized in that in the case of multistage evaporator systems 0.1 to 10 ppm, preferably 0.5 to 5 ppm, defoamer are fed to the first evaporators with the spent acid.

6. A process according to one or more of Claims 1 to 5, characterized in that in the case of multistage evaporator systems only the vapours from the evaporators in which the sulphuric acid concentration exceeds 40 wt% are passed through drop separators.

7. A process according to one or more of Claims 1 to 6, characterized in that for the purpose of drop separation the vapours are first passed through a separator sprayed with spent acid and subsequently through a demister.

8. A process according to one or more of Claims 1 to 7, characterized in that for the purpose of drop separation the vapours are first passed through a plate-type separator sprayed with spent acid and subsequently through a demister.

9. An apparatus for the elimination of sulphuric acid drops containing metal sulphate from vapours, characterized in that a demister is arranged horizontally after a plate-type separator and before the plate-type separator an inlet pipe and spraying device is present for spraying the plate-type separator with spent acid.

## Revendications

1. Procédé de récupération d'acide sulfurique provenant d'acides dilués contenant des sulfates métalliques, par concentration par évaporation, séparation de gouttes contenant de l'acide sulfurique et des sulfates métalliques, des vapeurs chaudes avant leur condensation et séparation des sulfates métalliques de la suspension obtenue par concentration par évaporation, caractérisé en ce que les vapeurs chaudes sont amenées dans un système de séparateur à gouttes qui est arrosé par de l'acide dilué.

2. Procédé selon la revendication 1, caractérisé en ce qu'au moins 30% et, de préférence, de 50 à 100% de l'acide dilué introduit dans le système d'évaporateur en vue de la concentration par évaporation est injecté dans le système de séparateurs à gouttes et est amené ensuite dans les évaporateurs avec les gouttes et les substances solides séparées des vapeurs chaudes.

3. Procédé selon l'une des revendications 1 ou 2 caractérisé en ce que l'acide dilué est injecté en continu dans le système de séparateurs à gouttes.

4. Procédé selon ou une plusieurs des revendications 1 à 3, caractérisé en ce que l'acide dilué injecté dans le système de séparateurs à gouttes présente une température de 50°C au maximum et, de préférence, inférieure à 40°C.

5. Procédé selon une ou plusieurs des revendications 1 à 4, caractérisé en ce que, dans le cas de systèmes d'évaporateurs à plusieurs étages, on introduit avec l'acide dilué de 0,1 à 10 ppm et, de préférence, de 0,5 à 5 ppm d'agent antimousse dans le premier évaporateur.

6. Procédé selon une ou plusieurs des revendications 1 à 5, caractérisé en ce que dans le cas de systèmes d'évaporateurs à plusieurs étages, seules les vapeurs chaudes provenant des évaporateurs dont la concentration en acide sulfurique est supérieure à 40% en poids sont envoyées à travers les séparateurs à gouttes.

7. Procédé selon une ou plusieurs des revendications 1 à 6, caractérisé en ce que les vapeurs chaudes sont amenées tout d'abord dans un séparateur arrosé par l'acide dilué afin de séparer les gouttes et sont amenées ensuite dans un séparateur de buée.

8. Procédé selon une ou plusieurs des revendications 1 à 7, caractérisé en ce que les vapeurs chaudes sont amenées tout d'abord pour la séparation des gouttes dans un séparateur à lamelles, arrosé par de l'acide dilué, et sont amenées ensuite à travers un séparateur de buée.

9. Dispositif de séparation des vapeurs chaudes des gouttes d'acide sulfurique contenant des sulfates métalliques, caractérisé en ce qu'un séparateur de buée est disposé horizontalement derrière un séparateur à lamelles et qu'une conduite d'adduction et un dispositif d'arrosage sont prévus avant le séparateur à lamelles afin d'arroser le séparateur à lamelles avec de l'acide dilué.
